# EUROPÄISCHE PATENTSCHRIFT

(11) **EP 2 773 531 B1**
(45) Veröffentlichungstag und Bekanntmachung des Hinweises auf die Patenterteilung: **20.02.2019**
(21) Anmeldenummer: 12755993.8
(22) Anmeldetag: 03.09.2012
(51) Int. Cl.: G06K 9/00, B60Q 1/08, B60Q 1/14

(54) **VERFAHREN UND VORRICHTUNG ZUR GRUPPIERUNG VON BELEUCHTUNGSEINHEITEN**
METHOD AND DEVICE FOR GROUPING LIGHTING UNITS
PROCÉDÉ ET APPAREIL POUR LE GROUPEMENT D'UNITÉS D'ÉCLAIRAGE

(30) Priorität: 03.11.2011 DE 102011085689
(43) Veröffentlichungstag der Anmeldung: 10.09.2014
(73) Patentinhaber: Robert Bosch GmbH, 70442 Stuttgart (DE)
(72) Erfinder: VAN STAA, Sebastian, 71229 Leonberg (DE); FOLTIN, Johannes, 71254 Ditzingen (DE)
(86) Internationale Anmeldenummer: PCT/EP2012/067063
(87) Internationale Veröffentlichungsnummer: WO 2013/064283

(56) Entgegenhaltungen:
- EP-A2- 1 837 803
- WO-A1-2011/015625
- DE-A1-102005 017 933
- DE-A1-102009 034 224
- US-A1- 2004 201 483

## Beschreibung

### Stand der Technik

Die vorliegende Erfindung bezieht sich auf ein Verfahren zum Ermitteln einer Gruppe aus zumindest zwei benachbart angeordneten Beleuchtungseinheiten während der Fahrt eines Fahrzeugs, auf eine entsprechende Vorrichtung sowie auf ein entsprechendes Computerprogrammprodukt.

Die Erkennung durchgehender Straßenbeleuchtung, im Folgenden auch "Stadterkennung" genannt, ist für die Entwicklung von Fernlichtassistenten essentiell. Bei (adaptiven) Fernlichtassistenten darf bei durchgehender Straßenbeleuchtung nicht aufgeblendet werden. Es müssen demnach auch beleuchtete Straßen außerorts erkannt werden. Statt der "Erkennung durchgehender Straßenbeleuchtung" wird zur Vereinfachung der Begriff "Stadterkennung" verwendet. Eine solche Stadtlichterkennung ist in der DE 10 2009 028 342 A1 offenbart. Die DE 10 2009 028 342 A1 beschreibt ein Verfahren zur Bestimmung, ob eine Gegend beleuchtet ist. Das Verfahren wertet Bilddaten einer Kamera aus. Die Gegend wird dann als beleuchtet bewertet, wenn wenigstens zwei stationäre Straßenbeleuchtungseinheiten anhand der Bilddaten erkannt werden und wenn diese Straßenbeleuchtungseinheiten einen räumlichen Abstand voneinander aufweisen.

Die Basis der Stadterkennung ist die Detektion von mehreren Straßenlaternen innerhalb einer gewissen Strecke. Sobald mindestens zwei Straßenlaternen eine gewisse Zeit (Strecke) lang erkannt wurden, wird ein "Stadt-Signal" erzeugt und abgeblendet. Zu frühes Umschalten in den Stadt-Modus (d.h. ein Abblenden des Lichtes bzw. ein Senken des Lichtkegels oder Lichtaussendungsbereiches in Richtung der Fahrbahn) wird verhindert, indem die vertikale Position (Detektionswinkel) der Straßenlaterne im Bild ausgewertet wird.

Bei Fußgängerüberwegen und beleuchteten Kreuzungen soll hingegen nicht automatisch abgeblendet werden.

Die Druckschrift EP 1 837 803 A2 offenbart einen Frontscheinwerfer, eine Schlussleuchte und eine Straßenlicht-Erkennung.

### Offenbarung der Erfindung

Vor diesem Hintergrund wird mit der vorliegenden Erfindung ein Verfahren zum Ermitteln einer Gruppe aus zumindest zwei benachbart angeordneten Beleuchtungseinheiten während der Fahrt eines Fahrzeugs, weiterhin eine Vorrichtung, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zum Ermitteln einer Gruppe aus zumindest zwei benachbart angeordneten Beleuchtungseinheiten während der Fahrt eines Fahrzeugs, wobei das Verfahren Schritte gemäß Anspruch 1 aufweist.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Insbesondere weist eine solche Vorrichtung Einheiten auf, die ausgebildet sind, um je einen Schritt des Verfahrens auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Unter einer Beleuchtungseinheit wird eine bauliche (Infrastruktur-) Maßnahme oder ein bauliches Objekt im Bereich oder am Rand einer Fahrbahn betrachtet, welches aktiv Licht ausstrahlt. Beispielsweise kann eine solche Beleuchtungseinheit eine Straßenlaterne, ein leuchtendes Verkehrszeichen oder eine Lampe einer Ampelanlage sein. Unter einer Gruppe aus zumindest zwei benachbart angeordneten Beleuchtungseinheiten kann ein Cluster von zwei Beleuchtungseinheiten verstanden werden, die räumlich nahe beieinander angeordnet sind. Dabei können die Beleuchtungseinheiten beispielsweise an einem Fahrbandrand oder über einer Fahrbahn angeordnet oder erkannt werden, auf welcher das Fahrzeug während der Fahrt fährt. Unter einem Sensor kann beispielsweise ein optischer Sensor wie eine Kamera verstanden werden. Unter einem Erfassungsbereich kann ein von dem Sensor zu überwachender Bereich verstanden werden. Unter einem Verschwinden oder Austreten einer Beleuchtungseinheit aus dem Erfassungsbereich kann ein Austreten dieser Beleuchtungseinheit aus dem Erfassungsbereich des Sensors verstanden werden, wenn das Fahrzeug sich bewegt, die Beleuchtungseinheit jedoch nicht und somit das Fahrzeug (mit dem darin angeordneten Sensor) an der Beleuchtungseinheit vorbei fährt. Unter einer Strecke, die das Fahrzeug fährt, kann beispielsweise ein Weg (der zum Beispiel in Metern oder Zentimetern gemessen wird) verstanden werden. Dieser Weg kann beispielsweise durch eine Auswertung von vom Sensor aufgenommenen Bildern bestimmt werden, aus denen auf eine Fahrtgeschwindigkeit des Fahrzeugs und/oder eine vom Fahrzeug zurückgelegten Wegstrecke geschlossen werden kann. Alternativ oder zusätzlich können beispielsweise Signale der Raddrehzahlsensoren des Fahrzeugs genutzt werden, um auf die Geschwindigkeit des Fahrzeugs zu schließen. Das Bestimmen der Gruppe aus zumindest zwei benachbart angeordneten Beleuchtungseinheiten kann dann derart erfolgen, dass die erste und zweite Beleuchtungseinheit der Gruppe aus zumindest zwei benachbarten angeordneten Beleuchtungseinheit zugeordnet wird, wenn die erfasste Strecke in einer vor bestimmten Beziehung zu einem Streckenschwellwert steht und/oder wenn die erfasste Zeit in einer vorbestimmten zu einem Zeitschwellwert steht. Insbesondere kann dabei die erfasste Strecke kleiner sein als ein Streckenschwellwert oder die erfasste Zeit geringer sein, als der Zeitschwellwert.

Die vorliegende Erfindung basiert auf der Erkenntnis, dass nun einzelne im Erfassungsbereich eines Sensors erkannte Beleuchtungseinheiten bei Vorliegen eines bestimmten Kriteriums zu einer Gruppe von Beleuchtungseinheiten gruppiert werden können. Die vorliegende Erfindung bietet nun den Vorteil, dass diese Gruppe von Beleuchtungseinheiten für eine nachfolgende Auswertung der im Erfassungsbereich des Sensors erkannten Beleuchtungseinheiten präzisere und detailreichere Rückschlüsse auf die Umgebung des Fahrzeugs bietet als die Auswertung alleine auf der Basis von einzelnen erkannten Beleuchtungseinheiten, insbesondere in Bezug auf einen Verlauf der Fahrbahn oder eine Bewertung, ob das Fahrzeug gerade auf einer Fahrbahn in einer geschlossenen Ortschaft oder mit einer durchgehenden Straßenbeleuchtung fährt. Es müssen nicht zwingend beide Straßenlaternen gleichzeitig im Bild sichtbar sein und können dennoch nahe beieinander stehen, beispielsweise wenn sie sich an einer Straßenecke befinden und eine davon verdeckt ist. Vorteilhafterweise wartet man nicht, bis die zweite Straßenlaterne aus dem Erfassungsbereich verschwunden ist, wenn die gefahrene Strecke bereits größer ist als die Strecke, die für die Gruppierung verwendet wird. Dadurch kann schneller reagier werden und frühzeitiger eine durchgehende Straßenbeleuchtung erkannt werden.

Erfindungsgemäß werden im Schritt des Gruppierens die erste und zweite Beleuchtungseinheit dann in die Gruppe aus zumindest zwei benachbart angeordneten Beleuchtungseinheiten gruppiert, wenn die Strecke kürzer als der Streckenschwellwert ist und/oder es werden im Schritt des Gruppierens die erste und zweite Beleuchtungseinheit dann in die Gruppe aus zumindest zwei benachbart angeordneten Beleuchtungseinheiten gruppiert, wenn die Zeit kürzer als der Zeitschwellwert ist. Eine derartige Ausführungsform der vorliegenden Erfindung bietet den Vorteil, dass durch die Verwendung des Streckenschwellwerts oder des Zeitschwellwertes sehr präzise definiert werden kann, aber welcher Strecke bzw. Entfernung die beiden Beleuchtungseinheiten zueinander in die (gemeinsame) Gruppe gruppiert werden und/oder ab welcher (Fahrt-) Zeit die beiden Beleuchtungseinheiten in die (gemeinsame) Gruppe gruppiert werden. Hierdurch lässt sich um die "räumliche Ausdehnung" der Gruppe einstellen, die die entsprechenden Beleuchtungseinheiten enthält. Der in dem hier vorgestellten Ansatz verwendete Schwellwert kann beispielsweise auch variabel sein und/oder während der Fahrt angepasst werden.

Gemäß einer weiteren vorteilhaften Ausführungsform der vorliegenden Erfindung können im Schritt des Gruppierens die erste und zweite Beleuchtungseinheit nicht in die Gruppe aus zumindest zwei benachbart angeordneten Beleuchtungseinheiten gruppiert werden, wenn die Strecke länger als der Streckenschwellwert ist und/oder es können im Schritt des Gruppierens die erste und zweite Beleuchtungseinheit nicht in die Gruppe aus zumindest zwei benachbart angeordneten Beleuchtungseinheiten gruppiert werden, wenn die Zeit länger als der Zeitschwellwert ist. Eine derartige Ausführungsform der vorliegenden Erfindung bietet den Vorteil, dass ein klares Kriterium vorliegt, ab welcher Strecke, die zwischen der ersten und zweiten Beleuchtungseinheit abzufahren ist, und/oder ab welcher (Fahrt-) Zeit, die zwischen dem Austreten der ersten Beleuchtungseinheit aus dem Erfassungsbereich des Sensors und dem Austreten der zweiten Beleuchtungseinheit aus dem Erfassungsbereich des Sensors vergeht, die zumindest zwei Beleuchtungseinheiten nicht mehr in eine (gemeinsame) Gruppe gruppiert werden dürfen. Hierdurch kann sichergestellt werden, dass in einer nachfolgenden Verarbeitung eines Bildes vom Sensor auch beide Beleuchtungseinheiten als (räumlich hinreichend voneinander) getrennte oder entfernte Beleuchtungseinheiten betrachtet werden.

Eine besonders günstige Ausführungsform ergibt sich, wenn die Strecke und/oder Zeitdauer vom Austreten der ersten Beleuchtungseinheit an gemessen wird. Die erste und zweite Beleuchtungseinheit können im Schritt des Gruppierens nicht in die Gruppe zweier benachbarter Beleuchtungseinrichtungen gruppiert werden, wenn die Strecke seit Austreten der ersten Beleuchtungseinrichtung größer als ein Streckenschwellwert ist und/oder die Zeit seit Austreten der ersten Beleuchtungseinrichtung größer als ein Zeitschwellwert ist, wobei die zweite Beleuchtungseinrichtung noch nicht aus dem Erfassungsbereich des Sensors ausgetreten sein braucht. Dadurch kann das Gesamtsystem auf die zwei Beleuchtungseinrichtungen, die nicht zur Gruppe der benachbarten Beleuchtungseinrichtungen zusammengefasst werden können, reagieren, noch bevor die zweite Beleuchtungseinrichtung aus dem Erfassungsbereich verschwunden ist. Beispielsweise kann so frühzeitig eine durchgehende Straßenbeleuchtung erkannt werden und beispielsweise von Fernlicht auf Abblendlicht abgeblendet werden.

Günstig ist ferner eine Ausführungsform der vorliegenden Erfindung, bei der im Schritt des Erkennens eine dritte Beleuchtungseinheit erkannt wird, wobei im Schritt des Gruppierens die dritte Beleuchtungseinheit dann in die Gruppe aus zumindest zwei benachbart angeordneten Beleuchtungseinheiten gruppiert wird, wenn eine weitere Strecke, die das Fahrzeug ausgehend von einem Austreten der ersten Beleuchtungseinheit aus dem Erfassungsbereich des Sensors bis zu einem Austreten der dritten Beleuchtungseinheit aus dem Erfassungsbereich des Sensors fährt, in der vorbestimmten Beziehung zu dem Streckenschwellwert steht. Alternativ oder zusätzlich kann im Schritt des Gruppierens die dritte Beleuchtungseinheit dann in die Gruppe aus zumindest zwei benachbart angeordneten Beleuchtungseinheiten gruppiert werden, wenn eine Zeit, die das Fahrzeug ausgehend von einem Austreten der ersten Beleuchtungseinheit aus dem Erfassungsbereich des Sensors bis zu einem Austreten der dritten Beleuchtungseinheit aus dem Erfassungsbereich des Sensors fährt, in der vorbestimmten Beziehung zu dem Zeitschwellwert steht. Eine derartige Ausführungsform der vorliegenden Erfindung bietet den Vorteil, dass auch mehr als zweite Beleuchtungseinheiten in eine (gemeinsamen) Gruppe von Beleuchtungseinheiten gruppiert werden können, wenn diese Beleuchtungseinheiten räumlich oder in Bezug auf eine Fahrtzeit, ausgehend von einem Austreten der ersten Beleuchtungseinheit aus dem Erfassungsbereich des Sensors, als sehr nahe beieinander liegend zu betrachten sind. Somit können auch in einer nachfolgenden Weiterverarbeitung von mehr al zwei erkannten Beleuchtungseinheiten, die räumlich dicht beieinander angeordnet sind, als einzige Beleuchtungseinheit interpretiert oder bewertet werden. Auf diese Weise können Fehler bei der Auswertung der durch den Sensor erkannten einzelnen Beleuchtungseinheiten reduziert werden.

Günstig ist ferner eine Ausführungsform der vorliegenden Erfindung bei der im Schritt des Erkennens eine dritte Beleuchtungseinheit erkannt wird, wobei im Schritt des Gruppierens die dritte Beleuchtungseinheit nicht in die Gruppe aus zumindest zwei benachbart angeordneten Beleuchtungseinheiten gruppiert wird, wenn eine weitere Strecke, die das Fahrzeug ausgehend von einem Austreten der ersten Beleuchtungseinheit aus dem Erfassungsbereich des Sensors bis zu einem Austreten der dritten Beleuchtungseinheit aus dem Erfassungsbereich des Sensors fährt, nicht in der vorbestimmten Beziehung zu dem Streckenschwellwert steht. Alternativ oder zusätzlich kann im Schritt des Gruppierens die dritte Beleuchtungseinheit nicht in die Gruppe aus zumindest zwei benachbart angeordneten Beleuchtungseinheiten gruppiert werden, wenn eine Zeit, die das Fahrzeug ausgehend von einem Austreten der ersten Beleuchtungseinheit aus dem Erfassungsbereich des Sensors bis zu einem Austreten der dritten Beleuchtungseinheit aus dem Erfassungsbereich des Sensors fährt, nicht in der vorbestimmten Beziehung zu dem Zeitschwellwert steht. Eine derartige Ausführungsform der vorliegenden Erfindung bietet ebenfalls den Vorteil, dass ein klares Kriterium existiert, welche Beleuchtungseinheiten zu einer Gruppe zusammengefasst werden und welche weiteren erkannten Beleuchtungseinheiten nicht mehr zu der genannten Gruppe von Beleuchtungseinheiten gruppiert werden dürfen. Auf diese Weise kann ebenfalls eine Verbesserung der Ergebnisse in einer nachfolgenden weiteren Verarbeitung der erkannten Beleuchtungseinheiten beziehungsweise der zu einer Gruppe gruppierten Beleuchtungseinheiten erreicht werden.

Eine besonders vorteilhafte Ausführungsform der vorliegenden Erfindung lässt sich erreichen, wenn eine dritte Beleuchtungseinheit erkannt wird, jedoch nicht zur Gruppe aus zumindest zwei benachbarten Beleuchtungseinheiten gruppiert wird, wenn die gefahrene Strecke seit Austreten der ersten Beleuchtungseinheit größer als ein Streckenschwellwert ist und/ oder wenn die verstrichene Zeit seit Austreten der ersten Beleuchtungseinheit größer als ein Zeitschwellenwert ist, wobei die dritte Beleuchtungseinheit weiterhin sichtbar ist. Dadurch, dass nicht bis zum Austreten der dritten Beleuchtungseinheit gewartet wird, kann schneller auf das Vorhandensein mehrerer Beleuchtungseinheiten reagiert werden, wodurch beispielsweise schneller bei einer durchgehenden Straßenbeleuchtung abgeblendet werden kann.

Besonders vorteilhaft ist es, wenn gemäß einer weiteren Ausführungsform der vorliegenden Erfindung ein Verfahren zur Erkennung einer durchgehenden Fahrbahnbeleuchtung entlang einer von dem Fahrzeug zu befahrenden Fahrbahn vorgesehen ist, das die folgenden Schritte aufweist:
- Erfassen zumindest einer einzelnen Beleuchtungseinheit und einer Gruppe von zumindest zwei benachbart angeordneten Beleuchtungseinheiten, wie sie durch Ausführung eines Verfahrens gemäß einer der vorstehend beschriebenen Varianten ermittelt wurde;
- Bewerten der Gruppe von zumindest zwei benachbart angeordneten Beleuchtungseinheiten als eine einzelne Beleuchtungseinheit; und
- Erkennen der durchgehenden Fahrbahnbeleuchtung unter Verwendung der einzelnen Beleuchtungseinheit und der als einzelner Beleuchtungseinheit bewerteten Gruppe von zumindest zwei benachbart angeordneten Beleuchtungseinheiten.

Eine derartige Ausführungsform der vorliegenden Erfindung bietet den Vorteil, dass sich hierdurch die Fehlerwahrscheinlichkeit bei der Verarbeitung der vom Sensor erkannten Beleuchtungseinheiten deutlich reduzieren lässt, wenn insbesondere räumlich nahe beieinander angeordnete Beleuchtungseinheiten nicht als mehrere separate (das heißt getrennte) Beleuchtungseinheiten sondern als eine einzige (möglicherweise "große") Beleuchtungseinheit gewertet werden.

Besonders vorteilhaft ist es, wenn gemäß einer weiteren Ausführungsform der vorliegenden Erfindung im Schritt des Erkennens das Vorliegen einer durchgehenden Fahrbahnbeleuchtung dann erkannt wird, wenn das Fahrzeug zwischen einer Position der als einzelner Beleuchtungseinheit bewerteten Gruppe von zumindest zwei benachbart angeordneten Beleuchtungseinheiten und einer Position der einzelnen Beleuchtungseinheit eine vorbestimmte Fahrtstrecke und/oder eine vorbestimmte Fahrtzeit fährt. Alternativ oder zusätzlich kann im Schritt des Erkennens das Vorliegen einer durchgehenden Fahrbahnbeleuchtung dann erkannt werden, wenn das Fahrzeug zwischen einer Position der einzelnen Beleuchtungseinheit und einer Position der als einzelner Beleuchtungseinheit bewerteten Gruppe von zumindest zwei benachbart angeordneten Beleuchtungseinheiten eine vorbestimmte Fahrtstrecke und/oder eine vorbestimmte Fahrtzeit fährt. Eine derartige Ausführungsform der vorliegenden Erfindung bietet den Vorteil, dass die Berücksichtigung der von Gruppe von mehreren Beleuchtungseinheiten sowie einer separaten Beleuchtungseinheit eine deutlich reduzierte Fehlerwahrscheinlichkeit bei der Feststellung des Vorliegens einer durchgehenden Fahrbahnbeleuchtung ermöglicht, als dies bei einer getrennten Betrachtung jeder einzelnen Beleuchtungseinheit möglich wäre.

Besonders vorteilhaft ist eine Ausführungsform der vorliegenden Erfindung, bei der ein Verfahren zur Steuerung einer Lichtaussendung von zumindest einem Scheinwerfer des Fahrzeugs vorgesehen ist, wobei das Verfahren die folgenden Schritte aufweist:
- Erkennen der durchgehenden Fahrbahnbeleuchtung gemäß einer der vorstehend beschriebenen Variante; und
- Verändern der Lichtaussendung des zumindest einen Scheinwerfers des Fahrzeugs ansprechend auf das Vorliegen einer ermittelten Gruppe von zumindest zwei benachbart angeordneten Beleuchtungseinheiten, insbesondere wobei das Verändern der Lichtaussendung des zumindest einen Scheinwerfers des Fahrzeugs zu einem Zeitpunkt erfolgt, der in einer vorbestimmten Beziehung zu einem Zeitpunkt eines ermittelten Auftretens der Gruppe von zumindest zwei benachbart angeordneten Beleuchtungseinheiten erfolgt.

Eine derartige Ausführungsform der vorliegenden Erfindung bietet den Vorteil, dass hierdurch eine geringere Fehlerwahrscheinlichkeit bei dem Rückschluss von erkannten Beleuchtungseinheiten auf das Vorliegen einer durchgehenden Fahrbahnbeleuchtung und somit eine (zeitlich und räumlich) exaktere Umschaltung der Lichtaussendung an das tatsächlich vom Fahrzeuge zu durchfahrende Umfeld möglich wird.

Die Erfindung wird nachstehend anhand der beigefügten Zeichnungen beispielhaft näher erläutert. Es zeigen:
- Fig. 1: ein Blockschaltbild eines Fahrzeugs, in dem ein Ausführungsbeispiel der vorliegenden Erfindung verwendet wird;
- Fig. 2: ein Ablaufdiagramm eines Ausführungsbeispiels der vorliegenden Erfindung als Verfahren;
- Fig. 3: eine schematische Darstellung eines beispielhaften Szenarios mit einem Fahrzeug mit einer Kamera, einem Sichtbereich der Kamera und mehreren Straßenlaternen;
- Fig. 4: eine weitere schematische Darstellung eines beispielhaften Szenarios mit dem Fahrzeug mit einer Kamera, dem Sichtbereich der Kamera und Straßenlaternen, wobei zwei Straßenlaternen zu einer Gruppe von Beleuchtungseinheiten in einer Auswertungseinheit zusammengefasst wurden;
- Fig. 5: eine weitere schematische Darstellung eines beispielhaften Szenarios mit dem Fahrzeug mit der Kamera, dem Sichtbereich der Kamera und Straßenlaternen, wobei keine Zusammenfassung von Straßenlaternen als Gruppe von Beleuchtungseinheiten in der Auswertungseinheit des Fahrzeugs erfolgt ist;
- Fig. 6: eine weitere schematische Darstellung eines beispielhaften Szenarios mit dem Fahrzeug mit der Kamera, dem Sichtbereich der Kamera und Straßenlaternen, wobei eine Zusammenfassung von zweit Straßenlaternen als Gruppe von Beleuchtungseinheiten in einer Auswertungseinheit des Fahrzeugs erfolgt ist, eine dritte Beleuchtungseinheit die jedoch nicht zur Gruppe von Beleuchtungseinheiten gruppiert wurde; und
- Fig. 7a-c: Darstellungen von unterschiedlichen Beleuchtungssituationen, deren Auswertung unter Verwendung der vorliegenden Erfindung bessere Ergebnisse liefern, als ohne die Verwendung der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Eine Stadtlichterkennung zur Erkennung eines Durchfahrens durch ein beleuchtetes Gebiet, wie es durch beleuchtete Straßen in geschlossenen Ortschaften meist der Fall ist, ist in der DE 10 2009 028 342 A1 offenbart. Ampelanlagen, mehrfach beleuchtete Fußgängerüberwege, sowie mehrfach beleuchtete Kreuzungen befinden sich jedoch in lokal stark eingegrenzten Bereichen; daher können diese Bereiche auch oftmals als nicht "durchgehend" beleuchtet bezeichnet werden. Zumeist ist eine Unterscheidung solcher Verkehrsbereiche für einen Auswerte-Algorithmus sehr schwierig und es gibt es in der Nacht viele "False-Positives", d.h. es wird häufig auf das Durchfahren einer "Stadt" oder einer geschlossenen Ortschaft mit durchgehender Fahrbahnbeleuchtung erkannt, obwohl es sich tatsächlich bei der Verkehrsfläche vor dem Fahrzeug nur um einen Fußgängerüberweg, eine mehrfach beleuchtete Kreuzung oder eine Ampelanlage handelt.

Wenn die Erkennung der Straßenlaterne bei einem mehrfach beleuchteten Fußgängerüberweg/Kreuzung jede Leuchte schon früh als eigenständige Straßenlaterne erkannt wird, kann es durch die lange Detektionsdauer von mehreren Straßenlaternen fälschlicherweise zu einer Erkennung durchgehender Straßenbeleuchtung führen. Die eingebaute Sicherheit gegen zu frühes Umschalten der Lichtausstrahlung von Scheinwerfern des Fahrzeugs in den "Stadtmodus", indem die vertikale Position im Bild (Detektionswinkel) ausgewertet wird, nützt vorliegend meist nichts, da auch bei mehrfach beleuchteten Fußgängerüberwegen, Kreuzungen oder Ampelbereichen auch unter der Beleuchtung durchgefahren wird, wodurch die vertikale Position der Straßenlaterne ausreichend hoch wird.

Die Straßenlaternen können beispielsweise dadurch als solche klassifiziert werden, wenn es sich um selbstleuchtende statische Objekte mit einer gewissen Höhe handelt. Daher werden aber häufig auch Ampeln als Straßenlaternen klassifiziert. Eine Verbesserung auf Seiten eines Mess- oder Auswerteprogramms, d.h. bei der Klassifikation von Straßenlaternen, scheint schwer möglich. Es ist jedoch möglich auf Seiten der Stadterkennung mit moderatem Aufwand sowohl die False-Positives bei falsch klassifizierter Ampelanlage, als auch bei mehrfach beleuchteten Fußgängerüberwegen und Kreuzungen deutlich zu reduzieren.

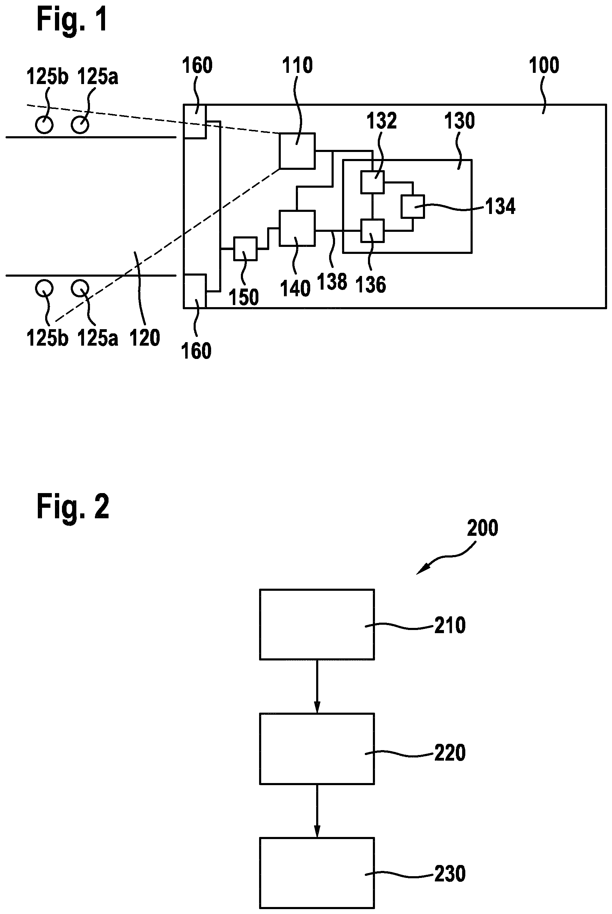

Fig. 1 zeigt ein Blockschaltbild eines Fahrzeugs, in dem ein Ausführungsbeispiel der vorliegenden Erfindung verwendet wird. Dabei zeigt die Fig. 1 ein Fahrzeug 100 welches eine Kamera 110 als einen Sensor, insbesondere einen optischen Sensor enthält. Die Kamera 110 erfasst Objekte, die sich in einem Erfassungsbereich 120 der Kamera befinden oder die sich in diesem Erfassungsbereich 120 bewegen, beispielsweise wenn das Fahrzeug 100 sich bewegt. Die Kamera 110 kann dabei Beleuchtungseinheiten 125a und 125b im Erfassungsbereich 120 erkennen, die beispielsweise durch Straßenlaternen, die Lichter einer Ampelanlage oder Ähnliches gebildet sind. Weiterhin umfasst das Fahrzeug 100 eine mit der Kamera 110 verbundene Auswertungseinheit 130 die in mehrere Teileinheiten aufweist. Insbesondere umfasst die Auswertungseinheit 130 einer Erkennungseinheit 132 zum Auswerten eines von der Kamera 110 gelieferten Bildes, wobei diese Erkennungseinheit 132 im ausgebildet ist, um zumindest eine erste Beleuchtungseinheit 125a und zumindest eine zweite Beleuchtungseinheit 125b in dem Erfassungsbereich des Sensors aus den Bild der Kamera 110 zu erkennen und um anschließend ein Austreten der ersten Beleuchtungseinheit 125a aus dem Erfassungsbereich 120 der Kamera 110 zu erkennen. Weiterhin umfasst die Auswertungseinheit 130 eine Erfassungseinheit 134, die ausgebildet ist, um ansprechend auf ein von der Erkennungseinheit 132 erkanntes Austreten der ersten 125a aus dem Erfassungsbereich der Kamera 110 eine Strecke und/oder eine Zeit zu erfassen, bis die zweite Beleuchtungseinheit 125b aus dem Erfassungsbereich 120 des Sensors bzw. der Kamera 110 austritt. Die Erfassungseinheit 134 kann dabei beispielsweise mit einer weiteren Sensorik des Fahrzeugs 100 verbunden sein, um über eine Erfassung der Drehzahl oder des Drehwinkels von Rädern des Fahrzeugs 100 die vom Fahrzeug 100 abgefahrene Strecke erkennt. Schließlich umfasst die Auswertungseinheit 130 noch eine Gruppierungseinheit 136, die mit der Erkennungseinheit 132 und der Erfassungseinheit 134 verbunden ist und wobei die Gruppierungseinheit 136 ausgebildet ist, um die erste 125a und zweite 125b Beleuchtungseinheit in die Gruppe aus zumindest zwei benachbart angeordneten Beleuchtungseinheiten zu gruppieren, wenn die Strecke in einer vorbestimmten Beziehung zu einem Streckenschwellwert steht und/oder wenn die Zeit in einer vorbestimmten Beziehung zu einem Zeitschwellwert steht. Denkbar ist es ferner, dass, wenn das Fahrzeug nach Austritt der ersten Beleuchtungseinheit lange genug, d.h. länger als die Schwelle, gefahren ist, die zweite Beleuchtungseinheit nicht zwangsweise aus dem Erfassungsbereich austreten braucht, um beide Beleuchtungseinheiten nicht zueinander zu gruppieren.

Als Ergebnis der Auswertungseinheit 130 wird somit eine Information ausgegeben, die eine Gruppe 138 aus zumindest zwei benachbarte angeordneten Beleuchtungseinheiten 125a, 125b repräsentiert, wobei diese Gruppe 138 zumindest die erste 125a und zweite 125b Beleuchtungseinheit umfasst. Ferner umfasst das Fahrzeug 100 eine Einheit 140 zur Erkennung einer durchgehenden Fahrbahnbeleuchtung, wobei diese Einheit 140 zur Erkennung der durchgehenden Fahrbahnbeleuchtung mit der Kamera 110 sowie der Auswertungseinheit 130 verbunden ist. Die Einheit 140 zu Erkennung der durchgehenden Fahrbahnbeleuchtung ist ausgebildet, um aus dem von der Kamera 110 gelieferten Bild Objekte im Erfassungsbereich 120 der Kamera 110 entsprechende Beleuchtungseinheiten 125 zur extrahieren und diese extrahierten Beleuchtungseinheiten 125 sowie der Kenntnis der zu einer Gruppe 138 gruppierten Beleuchtungseinheiten auszuwerten und ich hierdurch eine durchgehende Fahrbahnbeleuchtung zu erkennen, wie sie meist in einer geschlossenen Ortschaft vorliegt. Weiterhin umfasst das Fahrzeug 100 eine Scheinwerfersteuereinheit 150, die mit der Einheit 140 zur Erkennung der durchgehenden Fahrbahnbeleuchtung verbunden ist und die ausgebildet ist, um unter Verwendung einer Information, dass aktuell das Fahrzeug 100 in einer Umgebung fährt, in der eine durchgehende Fahrbahnbeleuchtung vorliegt, eine Aussendung von Licht durch Scheinwerfer 160 des Fahrzeugs 100 steuert. Beispielsweise kann diese Steuerung der Aussendung von Licht durch die Scheinwerfer 160 des Fahrzeugs 100 derart gesteuert werden, dass bei einem durchfahren eines Bereichs mit einer erkannten durchgehenden Fahrbahnbeleuchtung ein Licht der Scheinwerfer 160 nicht in einem Fernlicht-Modus ausgesandt wird, da durch die erkannte durchgehende Fahrbahnbeleuchtung ausreichend Licht zur Beleuchtung der vor dem Fahrzeug liegenden Fahrbahn zur Verfügung steht und zugleich die Fahrzeuglenker von entgegenkommenden Fahrzeugen nicht geblendet werden.

Fig. 2 zeigt ein Ablaufdiagramm eines Ausführungsbeispiels der vorliegenden Erfindung als Verfahren 200 zum Ermitteln einer Gruppe aus zumindest zwei benachbart angeordneten Beleuchtungseinheiten während der Fahrt eines Fahrzeugs. Das Verfahren 200 umfasst einen Schritt des Erkennens 210 zumindest einer ersten Beleuchtungseinheit in einem Erfassungsbereich eines Sensors und Erkennen eines anschließenden Austretens der ersten Beleuchtungseinheit aus dem Erfassungsbereich des Sensors. Ferner umfasst das Verfahren 200 einen Schritt des Beginnens eines Messens 220 einer Strecke, die das Fahrzeug nach einem Austreten der ersten Beleuchtungseinheit aus dem Erfassungsbereich des Sensors fährt und/oder des Beginnens eines Messens einer Zeit, die das Fahrzeug nach einem Austreten der ersten Beleuchtungseinheit aus dem Erfassungsbereich des Sensors fährt. Schließlich umfasst das Verfahren 200 einen Schritt des Gruppierens 230 der ersten Beleuchtungseinheit mit einer zweiten Beleuchtungseinheit in die Gruppe aus zumindest zwei benachbart angeordneten Beleuchtungseinheiten, wenn eine gemessene Strecke bis zu einem Austreten der zweiten Beleuchtungseinheit aus dem Erfassungsbereich des Sensors in einer vorbestimmten Beziehung zu einem Streckenschwellwert steht und/oder wenn eine gemessene Zeit bis zu einem Austreten der zweiten Beleuchtungseinheit aus dem Erfassungsbereich des Sensors in einer vorbestimmten Beziehung zu einem Zeitschwellwert steht und/oder des Nicht-Gruppierens der ersten Beleuchtungseinheit mit einer zweiten Beleuchtungseinheit in die Gruppe aus zumindest zwei benachbart angeordneten Beleuchtungseinheiten, wenn eine aktuell gemessene Strecke größer als der Streckenschwellwert ist und/oder wenn die wenn eine aktuell gemessene Zeit länger als der Zeitschwellwert ist.

Straßenlaternen oder allgemeiner Beleuchtungseinheiten werden gemäß einem Ausführungsbeispiel der vorliegenden Erfindung somit als eine Art "Beleuchtungs-Cluster" (d.h. zu einer Gruppe von mehreren benachbart angeordneten Beleuchtungseinheiten) zusammengefasst, wenn sie sehr nahe beieinander stehen. Dazu wird nach der Erkennung der Straßenlaterne gewartet, bis diese wieder aus dem Bild verschwindet. Alle Straßenlaternen, die innerhalb einer gewissen Strecke seit dem Verschwinden der ersten Straßenlaterne aus dem Bild verschwinden, werden zu einem Beleuchtungs-Cluster zusammengefasst. Ein Beleuchtungs-Cluster wird bei einer nachfolgenden Auswertung, beispielsweise zur Erkennung einer durchgehenden Straßenbeleuchtung wie eine einzelne Straßenlaterne oder Beleuchtungseinheit behandelt. Dadurch ist es möglich, dass mehrfach beleuchtete Kreuzungen und Fußgängerüberwege, sowie Ampelanlagen, nicht fälschlicherweise als "durchgehende" Straßenbeleuchtung angesehen werden, sondern als einzelne "Straßenlaterne" bzw. Beleuchtungseinheit (d.h. einzelner Beleuchtungscluster) behandelt wird. Die erkannten Straßenlaternen verschwinden nicht gleichzeitig aus dem Bild, wenn sie sich nicht in der exakt gleichen Entfernung befinden und die gleiche Höhe besitzen. Daher wird eine Strecke gewählt (z.B. 5 - 10m), innerhalb der aus dem Bild verschwindenden Straßenlaternen zu einem Beleuchtungs-Cluster gezählt werden.

Die vorliegende Erfindung kann gemäß einer oder mehreren unterschiedlichen Ausführungsformen sowohl Straßenlaternen von mehrfach beleuchteten Kreuzungen (Doppel-Laterne) und Ampelanlagen (unterschiedliche Einbauhöhen), wie auch mehrfach beleuchtete Fußgänger-Überwege als eine Beleuchtungsgruppe (d.h. als Gruppe von Beleuchtungseinheiten) zusammenfassen. Diese Zusammenfassung erfolgt beispielsweise gemäß der unter Bezugnahme auf die nachfolgenden Figuren näher erläuterten Vorgehensweise.

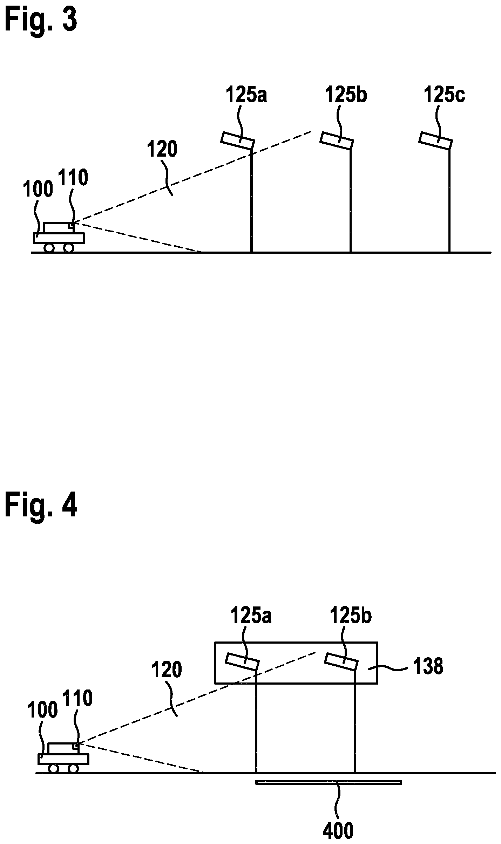

Fig.3 zeigt eine schematische Darstellung eines Szenarios mit einem Fahrzeug 100 mit einer Kamera 110, dem Sichtbereich 120 der Kamera 110 und Straßenlaternen 125. Dabei sind in der Fig. 3 eine erste Straßenlaterne (als erste Beleuchtungseinheit), eine zweite Straßenlaterne 125b (als zweite Beleuchtungseinheit) und eine dritte Straßenlaterne 125c (als dritte Beleuchtungseinheit) abgebildet, die sich in einem Bereich vor dem Fahrzeug 100 befinden. Wenn nun das Fahrzeug 100 in Richtung der Beleuchtungseinheiten 125 bewegt, wird zunächst die erste Beleuchtungseinheit 125a, die zweite Beleuchtungseinheit 125b (und eventuell auch die dritte Beleuchtungseinheit 125c) im Erfassungsbereich 120 der Kamera 110 auftauchen und als Beleuchtungseinheit in einer in der Fig. 3 nicht dargestellten Auswertungseinheit erkannt werden können. Bei der Weiterfahrt wird dann zuerst die erste Beleuchtungseinheit 125a, die dem Fahrzeug 100 am Nächsten ist, wieder aus dem Erfassungsbereich 120 der Kamera 110 austreten, wogegen die zweite Beleuchtungseinheit 125b (und eventuell auch noch die dritte Beleuchtungseinheit 125c) als noch im Erfassungsbereich 120 der Kamera 110 befindlich erkannt werden.

Nach dem Erfassen des Austretens der ersten (d.h. der hier dem Fahrzeug 100 am Nächsten liegenden) Beleuchtungseinheit 125a, wird nun eine Strecke erfasst, die das Fahrzeug 100 fährt, bis auch die zweite Beleuchtungseinheit 125b aus dem Erfassungsbereich 120 der Kamera 110 des Fahrzeugs 100 ausgetreten ist. Dies ist in der Fig. 4 schematisch dargestellt, wobei die nun die Strecke, die das Fahrzeug 100 gefahren ist, bis auch die zweite Beleuchtungseinheit 125b aus dem Erfassungsbereich 120 ausgetreten ist, am unteren Ende der Fig. 4 dargestellt ist. Besteht nun eine vorbestimmte Beziehung dieser erfassten Strecke zu einem Streckenschwellwert 400 (der durch die Länge der am unteren Ende der Fig. 4 als Balken repräsentiert ist), ist beispielsweise die Strecke kleiner als der Streckenschwellwert 400, werden die erste Beleuchtungseinheit 125a und die zweite Beleuchtungseinheit 125b zu einer Gruppe 138 von zumindest zwei benachbart angeordneten Beleuchtungseinheiten gruppiert oder zusammengefasst, wie es in der Fig. 4 schematisch angedeutet ist. Diese erfasste Strecke kann direkte oder indirekt nämlich einen Hinweis darauf geben, wie weit die erste Beleuchtungseinheit 125a von der zweiten Beleuchtungseinheit 125b tatsächlich entfernt ist, da in einer einfachen Näherung davon ausgegangen werden kann, dass die Strecke, die das Fahrzeug zwischen dem Austreten der ersten Beleuchtungseinheit 125a bis zum Austreten der zweiten Beleuchtungseinheit 125b jeweils aus dem Erfassungsbereich 120 der Kamera 110 auch demjenigen Abstand entspricht, die die erste Beleuchtungseinheit 125a von der zweiten Beleuchtungseinheit 125b entfernt ist. Dieser Streckenschwellwert 400 kann somit als eine Art "Zusammenfassungs-Strecke" bezeichnet werden, d.h. als Abstandsschwellwert, bei dem alle ab der ersten Beleuchtungseinheit 125a innerhalb dieses Abstandsschwellwerts nachfolgend angeordneten weiteren Beleuchtungseinheiten zu der Gruppe 138 von Beleuchtungseinheiten zugeordnet, d.h. in diese Gruppe 138 hinein gruppiert werden. Auf diese Weise kann eine Zusammenfassung beispielsweise der ersten 125a und zweiten 125b Straßenlaterne zur Erzeugung eines "Beleuchtungs-Cluster" vorgenommen werden, wenn die zweite Beleuchtungseinheit 125b innerhalb einer gewissen Distanz (d.h. hier beispielsweise der Zusammenfassungs-Strecke) zu der ersten Straßenlaterne 125a steht.

Alternativ oder zusätzlich kann auch die Zeit erfasst werden, die das Fahrzeug von einem erkannten Austreten der ersten Beleuchtungseinheit 125a aus dem Erfassungsbereich 120 der Kamera 110 bis zu einem erkannten Austreten der zweiten Beleuchtungseinheit 125b aus dem Erfassungsbereich 120 der Kamera 1100 verstreicht. Diese Zeit kann dann mit einem Zeitschwellwert verglichen werden, so dass auch auf diese Weise auf einen Abstand der ersten Beleuchtungseinheit 125a zu der zweiten Beleuchtungseinheit 125b rückgeschlossen werden kann. Hierbei ist jedoch zu beachten, dass der Zeitschwellwert günstigerweise von der Fahrtgeschwindigkeit abhängen sollte, um eine möglichst detailgenaue und präzise Ermittlung des Abstandes zwischen der ersten und zweiten Beleuchtungseinheit zuzulassen.

In einer nachfolgenden weiteren Verarbeitung der Bilder der Kamera 110, beispielsweise zur Steuerung der Lichtaussendung durch einen oder mehrere Scheinwerfer 160 des Fahrzeugs 100, wie es mit Bezug zur Fig. 1 erläutert wurde, kann nun diese Gruppe 138 von benachbart angeordneten Beleuchtungseinheiten als eine einzelne Beleuchtungseinheit 125 betrachtet oder bewertet werden. Auf diese Weise lässt sich vermeiden, dass eine Verkehrsfläche, die ein erhöhtes Gefahrenpotential bildet (wie beispielsweise im Bereich eines Fußgängerübergangs, einer größeren Straßenkreuzung oder einer Ampelanlage) als ein Fahrbahnabschnitt mit einer durchgehenden Fahrbahnbeleuchtung interpretiert wird. Da diese vorstehend genannten Bereiche meist aus Gründen der Verkehrssicherheit heller beleuchtet sind, als andere Fahrbahnbereiche ohne größeres Gefahrenpotential kann durch eine solche Gruppierung von mehreren Beleuchtungseinheiten auch sichergestellt werden, dass die Lichtaussendung durch die Scheinwerfer des (eigenen) Fahrzeugs nicht in kurzen Abständen verändert wird, wenn ein oder mehrere der vorstehend genannten Bereiche mit einem erhöhten Gefahrenpotential vom Fahrzeug 100 passiert werden. Wird nämlich bei der Bestimmung einer durchgehenden Fahrbahnbeleuchtung die Gruppe 138 von zumindest zwei benachbart angeordneten Beleuchtungseinheiten bei der Auswertung der im Bild der Kamera 110 erkannten Beleuchtungseinheiten als eine einzelne Beleuchtungseinheit gewertet, wird die Fehlerwahrscheinlichkeit für die Erkennung einer durchgehenden Fahrbahnbeleuchtung beim Durchfahren beispielsweise der vorstehend genannten Verkehrsflächen mit einem erhöhten Gefährdungspotential deutlich reduziert.

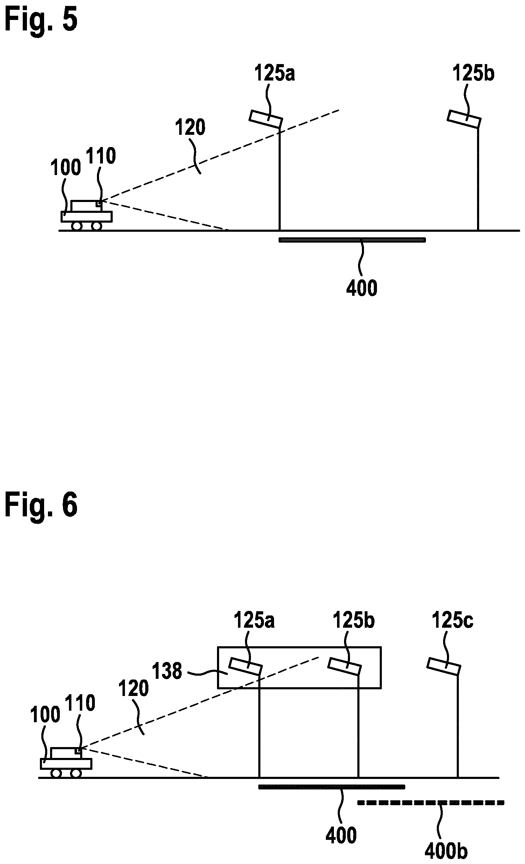

Fig. 5 zeigt eine weitere schematische Darstellung ein Szenario mit einem Fahrzeug 100 mit einer Kamera 110, dem Sichtbereich 120 der Kamera 11 und Straßenlaternen 125, wobei nun jedoch keine Zusammenfassung von Straßenlaternen 125 als Gruppe 138 von Beleuchtungseinheiten 125 erfolgt ist. Dies ist dadurch bedingt, dass die zweite Beleuchtungseinheit 125b in einer Entfernung von der ersten Beleuchtungseinheit 125a angeordnet ist, die größer als der Streckenschwellwert 400 ist. Somit werden die erste 125a und zweite 125b Beleuchtungseinheit auch nicht als eine einzelne Beleuchtungseinheit in einer nachfolgenden Auswertung des Bildes der Kamera 110 betrachtet oder bewertet. Die Auswertung der im Erfassungsbereich 120 der Kamera 110 erkannten Beleuchtungseinheiten 125 erfordert zur Verringerung der Fehlerwahrscheinlichkeit keine Zusammenfassung der beiden Straßenlaternen, da diese nicht innerhalb der Zusammenfassungsstrecke stehen; es kann somit eine reguläres Auswertungsverhalten des Bildes der Kamera 110 verwendet werden.

Fig. 6 zeigt eine weitere schematische Darstellung eines Szenarios mit einem Fahrzeug 100 mit einer Kamera 110, dem Sichtbereich 120 der Kamera und Straßenlaternen 125, wobei eine Zusammenfassung von zwei Straßenlaternen 125 als Gruppe 138 von Beleuchtungseinheiten erfolgt ist, eine dritte Beleuchtungseinheit jedoch nicht zur Gruppe von Beleuchtungseinheiten gruppiert wurde. Eine solche Gruppierungsvorschrift basiert auf der Annahme, dass nur Beleuchtungseinheiten zusammengefasst werden sollten, die auch innerhalb eines vorbestimmten Abstandes zueinander angeordnet sind. Ist nun die dritte Beleuchtungseinheit 125c weiter von der ersten Beleuchtungseinheit 125a entfernt als durch den Streckenschwellwert maximal vorgegeben ist, sollte bzw. darf sie nicht zur Gruppe 138 der Beleuchtungseinheiten gruppiert werden. Vielmehr kann nach dem Austreten der zweiten Beleuchtungseinheit 125b aus dem Erfassungsbereich 120 der Kamera 110 eine erneute Ausführung der vorstehend beschriebenen Vorgehensweise erfolgen, so dass Beleuchtungseinheiten, die innerhalb eines bestimmten Abstandes zueinander stehen in eine gemeinsame Gruppe von Beleuchtungseinheiten gruppiert werden. Dies kann dann beispielsweise auch dazu führen, dass eine Beleuchtungseinheit (wie in der Darstellung aus Fig. 6 die zweite Beleuchtungseinheit 125b) in zwei Gruppen von Beleuchtungseinheiten gruppiert wird, wobei die zweite Gruppe von Beleuchtungseinheiten, die in der Fig. 6 nicht dargestellt ist, dann die zweite 125b und dritte 125c Beleuchtungseinheit (d.h. hier Straßenlaterne) umfassen kann. Dies resultiert daraus, dass die zweite Beleuchtungseinheit 125b in einem Abstand zur dritten Beleuchtungseinheit 125c steht, der geringer oder zumindest nicht größer als der (weitere gestrichelt dargestellte) Streckenschwellwert ist, der in der Fig. 6 nun mit dem Bezugszeichen 400b bezeichnet ist und ausgehend von der zweiten Beleuchtungseinheit 125b in Richtung der dritten Beleuchtungseinheit 125c bestimmt wird. In der Fig. 6 wurde somit eine Zusammenfassung ersten 125a und zweiten 125b Straßenlaterne in einem gemeinsame Gruppe 138 vorgenommen, da die erste und zweite Beleuchtungseinheit innerhalb der (bzw. einer ersten) Zusammenfassungs-Strecke 400 liegt, wogegen die dritte Beleuchtungseinheit 125c nicht in die Gruppe 138 gruppiert wird, da eine Zusammenfassung von Straßenlaternen nur für Straßenlaternen ab erster Straßenlaterne durchgeführt wird, die in einem maximalen vorbestimmten Abstand 400 zur ersten Straßenlaterne stehen. Weitere Straßenlaternen werden dann in eine (oder mehrere) andere Gruppe(n) gruppiert.

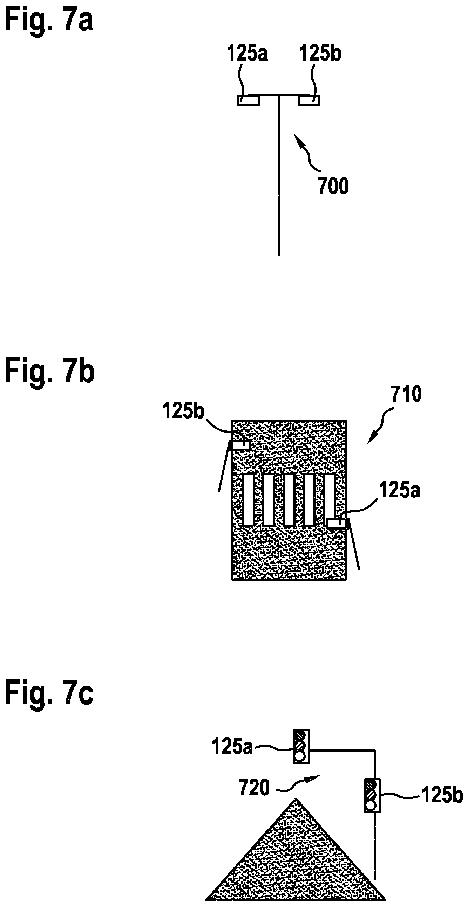

Fig. 7a zeigt eine Darstellung einer Beleuchtungssituation, bei der eine Verkehrsfläche von einer Doppellaterne 700 beleuchtet ist. Diese Doppellaterne 700 würde von einem Auswertungsalgorithmus bei der Erkennung von Beleuchtungseinheiten als zwei getrennte Beleuchtungseinheiten 125a und 125b erkannt und in der weiteren Signalverarbeitung auch als getrennten Beleuchtungseinheiten bewertet. Dies würde dazu führen, dass eine durchgehende Fahrbahnbeleuchtung möglicherweise bereits bei der Erkennung einer einzigen einer solchen Doppellaterne 700 erfolgt, was einen Fehler darstellen würde. Durch die Verwendung des hier vorgeschlagenen Ansatzes wird jedoch (bedingt durch die unterschiedlichen Blickwinkel der Kamera auf die einzelnen Lampen der Doppellaterne 700) eine dieser Lampen früher aus dem Blickfeld der Kamera verschwinden und kurz danach die zweite der Lampen aus dem Blickfeld der Kamera verschwinden. Hierdurch können gemäß dem vorstehend beschriebenen Ansatz die einzelnen Lampen der Doppellaterne 700 als Gruppe von Beleuchtungseinheiten gruppiert werden und bei einer nachfolgenden Auswertung des Bildes der Kamera als einzelne Beleuchtungseinheit bewertet werden. Dies führt zu einer Reduktion der Fehlerwahrscheinlichkeit bei der nachfolgenden Signalverarbeitung des Bildes der Kamera. Der Ansatz kann auch bei gleichzeitigem Verschwinden der beiden Lampen eingesetzt werden, da dann der Abstand (Strecke und/oder Zeit) zwischen beiden Lampen als kleiner als der Schwellenwert (Strecke und/oder Zeit) angenommen werden kann.

In der Fig. 7b ist ein Szenario einer Verkehrsfläche im Bereich eines Fußgängerüberweges 710 (hier in der Form eines Zebrastreifens) dargestellt. Im Bereich eines solchen Fußgängerüberweges 710 wird zur besseren Erkennung von Fußgängern, die den Fußgängerüberweg 710 verwenden, meist eine hellere Beleuchtung durch die Anordnung von mehreren dicht beieinander stehenden Beleuchtungseinheiten 125a und 125b verwendet. Dies kann wiederum zu Fehlern bei der Erkennung derart dicht beieinander stehender Straßenlaternen führen, die zu Fehlern in der Erkennung einer durchgehenden Fahrbahnbeleuchtung führt. Wird nun der vorstehend beschriebene Ansatz verwendet, können auch hier die beiden Beleuchtungseinheiten zu einer Gruppe von Beleuchtungseinheiten zusammengefasst werden, die dann als einzelne Beleuchtungseinheit in der Auswertung des Bildes der Kamera verwendet wird.

In der Fig. 7c ist eine Ampelanlage 720 gezeigt, die mehrere Lichtsignale 125a und 125b in unterschiedlicher Höhe und Abstand vom Rand der Fahrbahn aufweist. Auch hier würde durch die Erkennung der einzelnen Lichter 125a und 125b der Ampelanlage 720 bei der Erkennung einer durchgehenden Fahrbahnbeleuchtung ein Fehler auftreten, da die sehr nahe beieinander angeordneten Lichter der Ampelanlage fehlerhaft auf eine durchgehende Fahrbahnbeleuchtung schließen lassen würden. Werden dagegen die Lichter der Ampelanlage 720 zu einer Gruppe gruppiert, und wird diese Gruppe von Beleuchtungseinheiten beispielsweise bei der Erkennung einer durchgehenden Fahrbahnbeleuchtung als einzelne Beleuchtungseinheit interpretiert, kann auch in einem solchen Fall eine signifikante Reduktion der Fehlerwahrscheinlichkeit in der nachfolgenden Bildauswertung erreicht werden.

Die in der Fig. 7 dargestellten Beispiele stellen somit kritische Auswertungssituationen dar, die mit vorliegender Erfindung verbessert gelöst werden können, wobei in der Fig. 7a eine Doppel-Leuchte z.B. an Kreuzungen dargestellt ist, in der Fig. 7b ein mehrfach beleuchteter Fußgänger-Überweg mit Straßenlaternen in unterschiedlicher Entfernung dargestellt ist und in der Fig. 7c eine Ampelanlage mit Signalen in unterschiedlicher Höhe dargestellt ist, wobei die Ampel meist als Straßenlaterne(n) erkannt wird/werden.

Nachteilig wirkt sich bei der vorliegenden Erfindung aus, dass die Erkennung durchgehender Straßenbeleuchtung nicht mehr so vorausschauend erfolgt, sondern ein mehr reaktives Verhalten erreicht wird. Die False-Positive-Rate, die starken Einfluss auf die Zufriedenheit des (End-) Kunden hat, kann durch die vorliegende Erfindung stark verbessert werden.

Bei der Ausfahrt aus einem beleuchteten Gebiet, bei dem sofort auf ein Auftauchen einer Straßenlaterne reagiert werden sollte, um nicht innerhalb eines beleuchteten Gebiets aufzublenden, ist eine Zusammenfassung wegen der erhöhten Reaktionszeit zu einem Beleuchtungs-Cluster nicht empfehlenswert.

Die Straßenlaternen, die innerhalb einer gewissen Strecke nach dem Verschwinden der ersten Straßenlaterne zusammengefasst werden, setzen die Streckenzählung vorzugsweise nicht zurück. Dadurch ist es auch möglich eng beieinander stehende Straßenlaternen einer durchgehenden Straßenbeleuchtung als zumindest zwei Beleuchtungs-Cluster zu trennen und so die Stadterkennung durchzuführen.

Wenn nach Zusammenfassung von Straßenlaternen zu einem Beleuchtungs-Cluster (d.h. der Gruppe von Beleuchtungseinheiten) noch weitere Straßenlaternen im Bild vorhanden sind, aber die Zusammenfassungs-Strecke bereits zurückgelegt wurde, soll schneller in den Bereich durchgehender Straßenbeleuchtung geschaltet werden, da sich bereits mehrere Straßenlaternen hinter dem Fahrzeug befinden.

Die beschriebenen und in den Figuren gezeigten Ausführungsbeispiele sind nur beispielhaft gewählt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Ermitteln einer Gruppe (138) aus zumindest zwei benachbart angeordneten Beleuchtungseinheiten (125a, 125b) während der Fahrt eines Fahrzeugs (100), wobei die Beleuchtungseinheiten (125a, 125b) bauliche Objekte im Bereich oder am Rand einer Fahrbahn repräsentieren, welche aktiv Licht ausstrahlen, wobei das Verfahren (200) die folgenden Schritte aufweist:
- Erkennen (210) zumindest einer ersten Beleuchtungseinheit (125a) in einem Erfassungsbereich (120) eines Sensors (110) und Erkennen eines anschließenden Austretens der ersten Beleuchtungseinheit (125a) aus dem Erfassungsbereich (120) des Sensors (110);
- Beginnen eines Messens (220) einer Strecke, die das Fahrzeug (100) nach einem Austreten der ersten Beleuchtungseinheit (125a) aus dem Erfassungsbereich (120) des Sensors (110) fährt und/oder Beginnen eines Messens einer Zeit, die das Fahrzeug (100) nach einem Austreten der ersten Beleuchtungseinheit (125a) aus dem Erfassungsbereich (120) des Sensors (110)fährt; und
- Gruppieren (230) der ersten (125a) Beleuchtungseinheit mit einer zweiten (125b) Beleuchtungseinheit in die Gruppe (138) aus zumindest zwei benachbart angeordneten Beleuchtungseinheiten,
**dadurch gekennzeichnet, dass**
im Schritt des Gruppierens (230) die erste (125a) und zweite (125b) Beleuchtungseinheit dann in die Gruppe (138) aus zumindest zwei benachbart angeordneten Beleuchtungseinheiten gruppiert werden, wenn eine gemessene Strecke bis zu einem Austreten der zweiten Beleuchtungseinheit (125b) aus dem Erfassungsbereich (120) des Sensors (110) kürzer als der Streckenschwellwert (400) ist und/oder dass im Schritt des Gruppierens (230) die erste (125a) und zweite (125b) Beleuchtungseinheit dann in die Gruppe (138) aus zumindest zwei benachbart angeordneten Beleuchtungseinheiten gruppiert werden, wenn eine gemessene Zeit bis zu einem Austreten der zweiten Beleuchtungseinheit (125b) aus dem Erfassungsbereich (120) des Sensors (110) kürzer als der Zeitschwellwert ist, wobei ferner im Schritt des Gruppierens (230) die erste (125a) und zweite (125b) Beleuchtungseinheit nicht in die Gruppe (138) aus zumindest zwei benachbart angeordneten Beleuchtungseinheiten gruppiert werden, wenn die Strecke länger als der Streckenschwellwert (400) ist und/oder dass im Schritt des Gruppierens (230) die erste (125a) und zweite (125b) Beleuchtungseinheit nicht in die Gruppe (138) aus zumindest zwei benachbart angeordneten Beleuchtungseinheiten gruppiert werden, wenn die Zeit größer als der Zeitschwellwert ist, und/oder
im Schritt des Erkennens (210) zumindest eine dritte Beleuchtungseinheit (125c) erkannt wird, wobei im Schritt des Gruppierens (230) die dritte Beleuchtungseinheit (125c) dann in die Gruppe (138) aus zumindest zwei benachbart angeordneten Beleuchtungseinheiten gruppiert wird, wenn eine weitere Strecke, die das Fahrzeug (100) ausgehend von einem Austreten der ersten Beleuchtungseinheit (125a) aus dem Erfassungsbereich (120) des Sensors (110) bis zu einem Austreten der dritten Beleuchtungseinheit (125c) aus dem Erfassungsbereich (120) des Sensors (110) fährt, kürzer als der Streckenschwellwert (400) ist und/oder wobei im Schritt des Gruppierens (230) die dritte Beleuchtungseinheit (125c) dann in die Gruppe (138) aus zumindest zwei benachbart angeordneten Beleuchtungseinheiten gruppiert wird, wenn eine Zeit, die das Fahrzeug (100) ausgehend von einem Austreten der ersten Beleuchtungseinheit (125a) aus dem Erfassungsbereich (1200) des Sensors (110) bis zu einem Austreten der dritten Beleuchtungseinheit (125c) aus dem Erfassungsbereich (120) des Sensors (110) fährt, kürzer als der Zeitschwellwert ist, und/oder
im Schritt des Erkennens (210) eine dritte Beleuchtungseinheit (125c) erkannt wird, wobei im Schritt des Gruppierens (230) die dritte Beleuchtungseinheit (125c) nicht in die Gruppe (138) aus zumindest zwei benachbart angeordneten Beleuchtungseinheiten gruppiert wird, wenn eine weitere Strecke, die das Fahrzeug (100) ausgehend von einem Austreten der ersten Beleuchtungseinheit (125a) aus dem Erfassungsbereich (120) des Sensors (110) fährt, länger als der Streckenschwellwert (400) ist und/oder wobei im Schritt des Gruppierens (230) die dritte Beleuchtungseinheit (125c) nicht in die Gruppe (138) aus zumindest zwei benachbart angeordneten Beleuchtungseinheiten gruppiert wird, wenn eine Zeit, die das Fahrzeug (100) ausgehend von einem Austreten der ersten Beleuchtungseinheit (125a) aus dem Erfassungsbereich (120) des Sensors (110) fährt, größer als der Zeitschwellwert ist,.

2. Verfahren zur Erkennung einer durchgehenden Fahrbahnbeleuchtung entlang einer von dem Fahrzeug(100) zu befahrenden Fahrbahn, wobei das Verfahren zur Erkennung der durchgehenden Fahrbahnbeleuchtung die folgenden Schritte aufweist:
- Einlesen zumindest einer einzelnen Beleuchtungseinheit (125) und einer Gruppe (138) von zumindest zwei benachbart angeordneten Beleuchtungseinheiten, die durch Ausführung des Verfahrens (200) gemäß dem Anspruch 1 ermittelt wurde;
- Bewerten der Gruppe (138) von zumindest zwei benachbart angeordneten Beleuchtungseinheiten als eine einzelne Beleuchtungseinheit; und
- Erkennen der durchgehenden Fahrbahnbeleuchtung unter Verwendung der einzelnen Beleuchtungseinheit und der als einzelner Beleuchtungseinheit bewerteten Gruppe (138) von zumindest zwei benachbart angeordneten Beleuchtungseinheiten.

3. Verfahren gemäß Anspruch 2, **dadurch gekennzeichnet, dass** im Schritt des Erkennens das Vorliegen einer durchgehenden Fahrbahnbeleuchtung dann erkannt wird, wenn das Fahrzeug (100) zwischen einer Position der als einzelner Beleuchtungseinheit bewerteten Gruppe (138) von zumindest zwei benachbart angeordneten Beleuchtungseinheiten und einer Position der einzelnen Beleuchtungseinheit eine vorbestimmte Fahrtstrecke und/oder eine vorbestimmte Fahrtzeit fährt und/oder dass im Schritt des Erkennens das Vorliegen einer durchgehenden Fahrbahnbeleuchtung dann erkannt wird, wenn das Fahrzeug (100) zwischen einer Position der einzelnen Beleuchtungseinheit und einer Position der als einzelner Beleuchtungseinheit bewerteten Gruppe (138) von zumindest zwei benachbart angeordneten Beleuchtungseinheiten eine vorbestimmte Fahrtstrecke und/oder eine vorbestimmte Fahrtzeit fährt.

4. Verfahren zur Steuerung einer Lichtaussendung von zumindest einem Scheinwerfer (160) des Fahrzeugs (100), wobei das Verfahren die folgenden Schritte aufweist:
- Erkennen der durchgehenden Fahrbahnbeleuchtung gemäß einem der Ansprüche 2 oder 3; und
- Verändern der Lichtaussendung des zumindest einen Scheinwerfers (160) des Fahrzeugs (100) ansprechend auf das Vorliegen einer ermittelten Gruppe (138) von zumindest zwei benachbart angeordneten Beleuchtungseinheiten, insbesondere wobei das Verändern der Lichtaussendung des zumindest einen Scheinwerfers (160) des Fahrzeugs (100) zu einem Zeitpunkt erfolgt, der in einer vorbestimmten Beziehung zu einem Zeitpunkt eines ermittelten Auftretens der Gruppe (138) von zumindest zwei benachbart angeordneten Beleuchtungseinheiten erfolgt.

5. Vorrichtung (130), die Einheiten aufweist, die ausgebildet sind, um die Schritte eines Verfahrens (200) gemäß einem der Ansprüche 1 bis 4 durchzuführen.

6. Computer-Programmprodukt mit Programmcode zur Durchführung des Verfahrens (200) nach einem der Ansprüche 1 bis 4, wenn das Programm auf einer Vorrichtung (130) gemäß Anspruch 5 ausgeführt wird.

## Claims

1. Method (200) for determining a group (138) of at least two adjacently arranged illumination units (125a, 125b) during the travel of a vehicle (100), wherein the illumination units (125a, 125b) represent structural objects in the region or at the edge of a roadway which actively emit light, wherein the method (200) comprises the following steps:
- recognizing (210) at least one first illumination unit (125a) in a detection region (120) of a sensor (110) and recognizing subsequent exiting of the first illumination unit (125a) from the detection region (120) of the sensor (110);
- beginning of measuring (220) a distance travelled by the vehicle (100) after exiting of the first illumination unit (125a) from the detection region (120) of the sensor (110) and/or beginning of measuring a time during which the vehicle (100) travels after exiting of the first illumination unit (125a) from the detection region (120) of the sensor (110); and
- grouping (230) the first (125a) illumination unit with a second (125b) illumination unit into the group (138) of at least two adjacently arranged illumination units,
**characterized in that**
in the step of grouping (230), the first (125a) and second (125b) illumination units are grouped into the group (138) of at least two adjacently arranged illumination units if a measured distance until exiting of the second illumination unit (125b) from the detection region (120) of the sensor (110) is shorter than the distance threshold value (400) and/or **in that** in the step of grouping (230), the first (125a) and second (125b) illumination units are grouped into the group (138) of at least two adjacently arranged illumination units if a measured time until exiting of the second illumination unit (125b) from the detection region (120) of the sensor (110) is shorter than the time threshold value, wherein furthermore
in the step of grouping (230), the first (125a) and second (125b) illumination units are not grouped into the group (138) of at least two adjacently arranged illumination units if the distance is longer than the distance threshold value (400) and/or wherein in the step of grouping (230), the first (125a) and second (125b) illumination units are not grouped into the group (138) of at least two adjacently arranged illumination units if the time is greater than the time threshold value, and/or in the step of recognizing (210), at least one third illumination unit (125c) is recognized, wherein in the step of grouping (230), the third illumination unit (125c) is grouped into the group (138) of at least two adjacently arranged illumination units if a further distance travelled by the vehicle (100) proceeding from exiting of the first illumination unit (125a) from the detection region (120) of the sensor (110) until exiting of the third illumination unit (125c) from the detection region (120) of the sensor (110) is shorter than the distance threshold value (400) and/or wherein in the step of grouping (230), the third illumination unit (125c) is grouped into the group (138) of at least two adjacently arranged illumination units if a time during which the vehicle (100) travels proceeding from exiting of the first illumination unit (125a) from the detection region (1200) of the sensor (110) until exiting of the third illumination unit (125c) from the detection region (120) of the sensor (110) is shorter than the time threshold value, and/or
in the step of recognizing (210), a third illumination unit (125c) is recognized, wherein in the step of grouping (230), the third illumination unit (125c) is not grouped into the group (138) of at least two adjacently arranged illumination units if a further distance travelled by the vehicle (100) proceeding from exiting of the first illumination unit (125a) from the detection region (120) of the sensor (110) is longer than the distance threshold value (400) and/or wherein in the step of grouping (230), the third illumination unit (125c) is not grouped into the group (138) of at least two adjacently arranged illumination units if a time during which the vehicle (100) travels proceeding from exiting of the first illumination unit (125a) from the detection region (120) of the sensor (110) is greater than the time threshold value.

2. Method for recognizing a continuous roadway illumination along a roadway to be travelled by the vehicle (100), wherein the method for recognizing the continuous roadway illumination comprises the following steps:
- reading in at least one single illumination unit (125) and a group (138) of at least two adjacently arranged illumination units which was determined by carrying out the method (200) according to Claim 1;
- evaluating the group (138) of at least two adjacently arranged illumination units as a single illumination unit; and
- recognizing the continuous roadway illumination using the single illumination unit and the group (138) of at least two adjacently arranged illumination units which has been evaluated as a single illumination unit.

3. Method according to Claim 2, **characterized in that** in the step of recognizing, the presence of a continuous roadway illumination is recognized if the vehicle (100) travels a predetermined travel distance and/or during a predetermined travel time between a position of the group (138) of at least two adjacently arranged illumination units which has been evaluated as a single illumination unit and a position of the single illumination unit and/or **in that** in the step of recognizing, the presence of a continuous roadway illumination is recognized if the vehicle (100) travels a predetermined travel distance and/or during a predetermined travel time between a position of the single illumination unit and a position of the group (138) of at least two adjacently arranged illumination units which has been evaluated as a single illumination unit.

4. Method for controlling a light emission of at least one headlight (160) of the vehicle (100), wherein the method comprises the following steps:
- recognizing the continuous roadway illumination according to either of Claims 2 and 3; and
- varying the light emission of the at least one headlight (160) of the vehicle (100) in response to the presence of a determined group (138) of at least two adjacently arranged illumination units, in particular wherein varying the light emission of the at least one headlight (160) of the vehicle (100) is carried out at a point in time implemented in a predetermined relationship with a point in time of a determined occurrence of the group (138) of at least two adjacently arranged illumination units.

5. Apparatus (130) comprising units configured to carry out the steps of a method (200) according to any of Claims 1 to 4.

6. Computer program product comprising program code for carrying out the method (200) according to any of Claims 1 to 4 if the program is executed on an apparatus (130) according to Claim 5.

## Revendications

1. Procédé (200) de détermination d'un groupe (138) composé d'au moins deux unités d'éclairage (125a, 125b) disposées adjacentes pendant le déplacement d'un véhicule (100), les unités d'éclairage (125a, 125b) représentant des objets de construction dans la zone ou au bord d'une chaussée, lesquels émettent activement de la lumière, le procédé (200) comprenant les étapes suivantes :
- reconnaissance (210) d'au moins une première unité d'éclairage (125a) dans une zone de détection (120) d'un capteur (110) et reconnaissance d'une sortie subséquente de la première unité d'éclairage (125a) hors de la zone de détection (120) du capteur (110) ;
- démarrage d'une mesure (220) d'un trajet que parcourt le véhicule (100) après une sortie de la première unité d'éclairage (125a) hors de la zone de détection (120) du capteur (110) et/ou démarrage d'une mesure d'un temps pendant lequel le véhicule (100) se déplace après une sortie de la première unité d'éclairage (125a) hors de la zone de détection (120) du capteur (110) ; et
- groupement (230) de la première (125a) unité d'éclairage avec une deuxième (125b) unité d'éclairage en le groupe (138) composé d'au moins deux unités d'éclairage disposées adjacentes,
**caractérisé en ce que**
dans l'étape de groupement (230), les première (125a) et deuxième (125b) unités d'éclairage sont groupées en le groupe (138) composé d'au moins deux unités d'éclairage disposées adjacentes lorsqu'un trajet mesuré jusqu'à une sortie de la deuxième unité d'éclairage (125b) hors de la zone de détection (120) du capteur (110) est plus court que la valeur de seuil de trajet (400) et/ou **en ce que** dans l'étape de groupement (230), les première (125a) et deuxième (125b) unités d'éclairage sont groupées en le groupe (138) composé d'au moins deux unités d'éclairage disposées adjacentes lorsqu'un temps mesuré jusqu'à une sortie de la deuxième unité d'éclairage (125b) hors de la zone de détection (120) du capteur (110) est plus court que la valeur de seuil de temps, et de plus
dans l'étape de groupement (230), les première (125a) et deuxième (125b) unités d'éclairage n'étant pas groupées en le groupe (138) composé d'au moins deux unités d'éclairage disposées adjacentes lorsque le trajet est plus long que la valeur de seuil de trajet (400) et/ou dans l'étape de groupement (230), les première (125a) et deuxième (125b) unités d'éclairage n'étant groupées en le groupe (138) composé d'au moins deux unités d'éclairage disposées adjacentes lorsque le temps est supérieur à la valeur de seuil de temps, et/ou
dans l'étape de reconnaissance (210), au moins une troisième unité d'éclairage (125c) est reconnue, et dans l'étape de groupement (230), la troisième unité d'éclairage (125c) étant alors groupée en le groupe (138) composé d'au moins deux unités d'éclairage disposées adjacentes lorsqu'un trajet supplémentaire, que parcourt le véhicule (100) à partir d'une sortie de la première unité d'éclairage (125a) hors de la zone de détection (120) du capteur (110) jusqu'à une sortie de la troisième unité d'éclairage (125c) hors de la zone de détection (120) du capteur (110), est plus court que la valeur de seuil de trajet (400) et/ou dans l'étape de groupement (230), la troisième unité d'éclairage (125c) étant alors groupée en le groupe (138) composé d'au moins deux unités d'éclairage disposées adjacentes lorsqu'un temps, pendant lequel le véhicule (100) se déplace à partir d'une sortie de la première unité d'éclairage (125a) hors de la zone de détection (1200) du capteur (110) jusqu'à une sortie de la troisième unité d'éclairage (125c) hors de la zone de détection (120) du capteur (110), est plus court que la valeur de seuil de temps, et/ou dans l'étape de reconnaissance (210), une troisième unité d'éclairage (125c) est reconnue, et dans l'étape de groupement (230), la troisième unité d'éclairage (125c) n'étant alors pas groupée en le groupe (138) composé d'au moins deux unités d'éclairage disposées adjacentes lorsqu'un trajet supplémentaire, que parcourt le véhicule (100) à partir d'une sortie de la première unité d'éclairage (125a) hors de la zone de détection (120) du capteur (110), est plus long que la valeur de seuil de trajet (400) et/ou dans l'étape de groupement (230), la troisième unité d'éclairage (125c) n'étant alors pas groupée en le groupe (138) composé d'au moins deux unités d'éclairage disposées adjacentes lorsqu'un temps, pendant lequel le véhicule (100) se déplace à partir d'une sortie de la première unité d'éclairage (125a) hors de la zone de détection (120) du capteur (110), est plus court que la valeur de seuil de temps.

2. Procédé de reconnaissance d'un éclairage de la chaussée ininterrompu le long d'une chaussée sur laquelle doit circuler le véhicule (100), le procédé de reconnaissance de l'éclairage de la chaussée ininterrompu comprenant les étapes suivantes :
- acquisition d'au moins une unité d'éclairage (125) individuelle et d'un groupe (138) composé d'au moins deux unités d'éclairage disposées adjacentes, qui ont été déterminées en mettant en oeuvre le procédé (200) selon la revendication 1 ;
- interprétation du groupe (138) composé d'au moins deux unités d'éclairage disposées adjacentes en tant qu'une unité d'éclairage individuelle ; et
- reconnaissance de l'éclairage de la chaussée ininterrompu en utilisant l'unité d'éclairage individuelle et le groupe (138) composé d'au moins deux unités d'éclairage disposées adjacentes, interprété comme une unité d'éclairage individuelle.

3. Procédé selon la revendication 2, **caractérisé en ce que** dans l'étape de reconnaissance, la présence d'un éclairage de la chaussée ininterrompu est reconnue lorsque le véhicule (100) parcourt un trajet prédéterminé et/ou se déplace pendant un temps de déplacement prédéterminé entre une position du groupe (138) composé d'au moins deux unités d'éclairage disposées adjacentes, interprété comme une unité d'éclairage individuelle, et une position de l'unité d'éclairage individuelle et/ou **en ce que** dans l'étape de reconnaissance, la présence d'un éclairage de la chaussée ininterrompu est reconnue lorsque le véhicule (100) parcourt un trajet prédéterminé et/ou se déplace pendant un temps de déplacement prédéterminé entre une position de l'unité d'éclairage individuelle et une position du groupe (138) composé d'au moins deux unités d'éclairage disposées adjacentes, interprété comme une unité d'éclairage individuelle.

4. Procédé de commande d'une émission lumineuse d'au moins un feu d'éclairage (160) du véhicule (100), le procédé comprenant les étapes suivantes :
- reconnaissance de l'éclairage de la chaussée ininterrompu selon l'une des revendications 2 ou 3 ; et
- modification de l'émission lumineuse de l'au moins un feu d'éclairage (160) du véhicule (100) en réaction à la présence d'un groupe (138) déterminé composé d'au moins deux unités d'éclairage disposées adjacentes, la modification de l'émission lumineuse de l'au moins un feu d'éclairage (160) du véhicule (100) s'effectuant à un instant qui a lieu dans une relation prédéterminée avec un instant d'une apparition déterminée du groupe (138) composé d'au moins deux unités d'éclairage disposées adjacentes.

5. Dispositif (130) qui possède des unités qui sont configurées pour exécuter les étapes d'un procédé (200) selon l'une des revendications 1 à 4.

6. Produit de programme informatique comprenant un code de programme pour mettre en oeuvre le procédé (200) selon l'une des revendications 1 à 4 lorsque le programme est exécuté sur un dispositif (130) selon la revendication 5.
